(19) **Europäisches Patentamt** **European Patent Office** **Office européen des brevets**

(11) **EP 4 551 901 B1**

(12) **EUROPEAN PATENT SPECIFICATION**

(45) Date of publication and mention
of the grant of the patent:
**24.06.2026 Bulletin 2026/26**

(21) Application number: **23742440.3**

(22) Date of filing: **04.07.2023**

(51) International Patent Classification (IPC):
*G01B 11/24* *(2006.01)* *G01N 3/06* *(2006.01)*
*G01N 3/56* *(2006.01)*

(52) Cooperative Patent Classification (CPC):
**G01B 11/24; G01N 3/068; G01N 3/56**

(86) International application number:
**PCT/IB2023/056921**

(87) International publication number:
**WO 2024/009217 (11.01.2024 Gazette 2024/02)**

(54) **METHOD, MEASUREMENT APPARATUS AND COMPUTER PROGRAM PRODUCT FOR CHARACTERIZATION OF WEAR TRACES IN TRIBOLOGICAL TESTS**

VERFAHREN, MESSVORRICHTUNG UND COMPUTERPROGRAMMPRODUKT ZUR CHARAKTERISIERUNG VON VERSCHLEISSSPUREN BEI TRIBOLOGISCHEN TESTS

PROCÉDÉ, APPAREIL DE MESURE ET PRODUIT-PROGRAMME INFORMATIQUE POUR LA CARACTÉRISATION DE TRACES D'USURE DANS DES TESTS TRIBOLOGIQUES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **06.07.2022 IT 202200014314**

(43) Date of publication of application:
**14.05.2025 Bulletin 2025/20**

(73) Proprietor: **Politecnico Di Torino**
**10129 Torino (TO) (IT)**

(72) Inventors:
• **GALETTO, Maurizio**
**10040 La Cassa (TO) (IT)**
• **GENTA, Gianfranco**
**12051 Alba (CN) (IT)**
• **MACULOTTI, Giacomo**
**10138 Torino (TO) (IT)**

(74) Representative: **Metroconsult Srl**
**Via Sestriere, 100**
**10060 None (TO) (IT)**

(56) References cited:
**US-A1- 2022 088 521**

• **PAWLUS PAWEL ET AL: "Material ratio curve as information on the state of surface topography-A review", vol. 65, 1 September 2020 (2020-09-01), AMSTERDAM, NL, pages 240 - 258, XP093018545, ISSN: 0141-6359, Retrieved from the Internet <URL:https://www.sciencedirect. com/science/article/pii/S0141635920301483/ pdfft? md5=bcdaf06dd18148268a234ab46ac75792& pid=1-s2.0-S0141635920301483-main.pdf> [retrieved on 20230127], DOI: 10.1016/ j.precisioneng.2020.05.008**

**Description**

The present invention relates to a measurement method and a measurement apparatus for automatic characterization of wear traces in tribological tests.

More specifically, the present invention relates to a method and a system for evaluating the wear volume observed during tribological tests by distinguishing between removed material components and added material components.

Tribological tests, whether conventional model tests for testing materials (e.g. pin-on-disc) or bench tests for testing actual components such as, for example, splined couplings and gears, are essential to investigate the wear conditions of the tribological pairs under examination, for the purpose of estimating the components' energy consumption, ability to generate polluting particulate matter, and resistance to fatigue.

To this end, it is necessary to accurately and repeatably identify the wear of a component by means of topographic or gravimetric measurements, in terms of worn material volume.

By determining the wear volume in terms of removed or displaced material, it is possible to study the resistance of different materials and coatings subjected to mechanical contact stresses. This is particularly important for selecting and optimizing materials to be used for manufacturing highly stressed mechanical components, such as gears, bearings and bushings.

Moreover, the ability to discern between different components is essential in many applications. In point of fact, the study of materials or components for brake disks, clutch disks or brake pads is based on material loss; on the contrary, the study of removed material and, in general, total damage (removed material plus added material) is essential in applications with very tight shape tolerances, e.g. gears and mechanical couplings.

By measuring the wear volume it is also possible to quantify the materials' wear rate and wear coefficient (Archard's equation), the latter being used in numerical models for wear damage simulations. This also permits validating theoretical-experimental models in order to predict the behaviour of the material pairs under examination.

Wear volume measurement is therefore essential, and it should be possible to distinguish between the various components (see for example: Maculotti et al., "Uncertainty-based comparison of conventional and surface topography-based methods for wear volume evaluation in pin-on-disc tribological test", Tribology International, Volume 165, January 2022, 107260; Genta et al., "Uncertainty evaluation of small wear measurements on complex technological surfaces by machine vision-aided topographical methods", CIRP Annals - Manufacturing Technology 70(1): 451-454, May 2021; Takimoto et al., "Rough surface wear analysis using image processing techniques", IFAC-PapersOnLine 49-31: 7-12, 2016).

After measurement, such applications first require identifying the wear trace, when it is a localized one as is the case with pin-on-disc tests. Secondly, they require discerning between different wear components, such as material removed or displaced, whether plastically or due to galling phenomena, and then assessing their volume (see ISO 18535, ASTM G40, G99 and G133 standards).

Such wear components morphologically appear, respectively, as valleys having more or less known, continuous and homogeneous shapes (depending on the tribological test taken into account) and peaks at the valleys' edges.

Material volume evaluations are mostly performed by analyzing the probability distribution of the heights of the measured surface, i.e. the Abbot-Firestone curve, or material ratio curve according to ISO 25178-2 (see for example François Blateyron "The Areal Field Parameters" in: Leach, "Characterisation of Areal Surface Texture", Springer, Berlin, 2013; Pawlus et al., "Material ratio curve as information on the state of surface topography - A review", Precision Engineering, Volume 65, September 2020, pp. 240-258).

By analyzing such curve it is possible to evaluate, after having identified a height threshold value ($h^*$), a pair of topographic parameters: material volume ($Vm$) and void volume ($Vv$). These represent, respectively, the volume of material comprised between the plane described by the threshold $h^*$ and the measured topography and the volume of missing material between said plane and said topography, as required for tribological characterization.

It is clear that the selection of the threshold $h^*$ affects the result considerably, and that automating the selection criterion is essential to ensure the metrological properties of accuracy and precision that are necessary for the results of tribological tests and wear analyses.

Several methods are known in the art for determining the threshold, or inflection point, $h^*$, which methods are based on the derivatives of the Abbott-Firestone curve.

For example, methods are known in literature which are based on regression methods applied to the Abbott-Firestone curve. By definition, in fact, linear regression minimizes the sum of the squares of the errors of the experimental points with respect to the model. However, linear regression does not guarantee any of the properties of the derivatives of the experimental and theoretical patterns.

Other solutions proposed in literature force the shape of the height distribution function by applying non-negligible hypotheses. In particular, two situations should be considered: (i) the distribution function either belongs to the Gamma, Normal (or t-Student) family or (ii) not.

In the former case (i), since the distribution function is an exponential function, the subsequent derivatives will be exponential compositions as well. Therefore, regressions of any order higher than the first one, when applied to a tract of non-negligible length of the total length, will introduce non-negligible approximation errors, i.e. errors not falling within the approximation criteria of a Taylor series. Likewise, even other available methods considering first-order linear approximations may possibly introduce significant errors, in that they bind the knowledge of the slope of the straight line to empirical relations validated and created for the characterization of cylindrical surfaces. As a matter of fact, they have been demonstrated and validated for such applications only, not for general cases.

In the latter case (ii), i.e. generic height distribution, it is clear that, in light of the above criticalities, generalization may result in further errors.

Other methods, which look for the point of maximum radius of curvature, i.e. identify the inflection point on the basis of geometrical considerations, may result in less precision due to propagation of the uncertainty of the estimates of the numerous parameters that need to be estimated in order to identify the radii of curvature.

Other methods are also known in literature for characterizing material volumes generated during tribological processes. However, such methods lack the application generality and robustness of the inventive method according to the present invention.

The main object of the present invention is to provide a measurement method and a measurement apparatus for automatic characterization of wear traces in tribological tests, which are adapted to reduce the uncertainty of measurement, thereby improving the precision of such characterization.

It is another object of the present invention to provide a measurement method and a measurement apparatus for automatic characterization of wear traces in tribological tests which can ensure accurate measurements.

It is a further object of the present invention to provide a measurement method and a measurement apparatus for automatic characterization of wear traces in tribological tests which can ensure fast inspection and measurement.

It is yet another object of the present invention to provide a measurement method and a measurement apparatus for automatic characterization of wear traces in tribological tests which are not sensitive to arbitrary choices made by the operator, thus being robust.

In brief, the solution proposed herein, which is the subject of the invention, aims at automatically determining the threshold value h* by using a numerical approximation algorithm based on the finite difference method. Such an algorithm makes it possible to evaluate the wear volume observed during tribological tests on the basis of topographic measurements and by means of a characterization study of the associated Abbott-Firestone curve.

Further objects, features and advantages of the present invention will become apparent in light of the following detailed description and of the annexed drawings, which are provided herein merely by way of non-limiting explanatory example, wherein:

- Figure 1 shows an Abbott-Firestone curve of a generic flat surface with random roughness and texture;
- Figure 2 shows an irregular pin-on-disc trace with galling phenomena at the edges;
- Figures 3a and 3b show, respectively, a measured topography obtained by alignment and difference of a circular wear trace made by means of a tribometer and the associated Abbott-Firestone curve with the indication of a threshold, or inflection point, h*;
- Figure 4 shows a flow chart of a method according to the present invention;

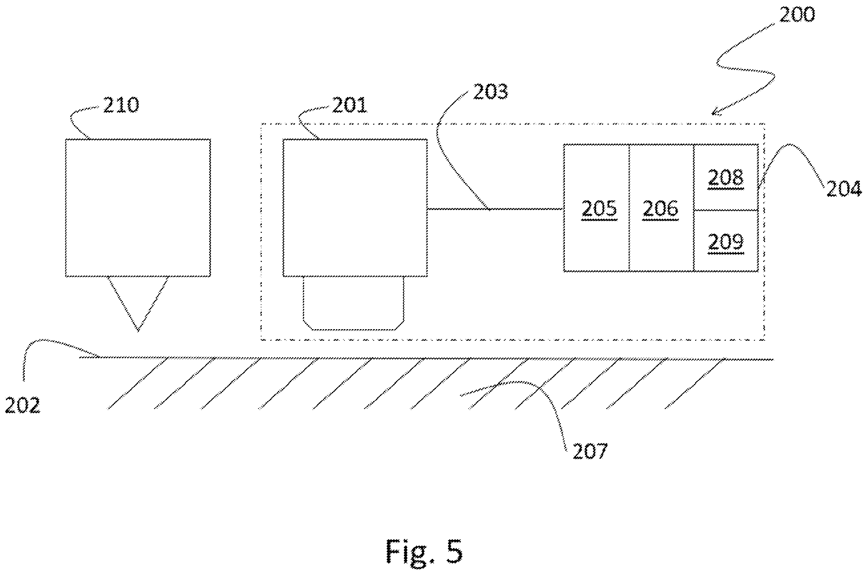

- Figure 5 shows a conceptual scheme of a measurement apparatus adapted to implement the method of Figure 4.

Let us now consider a surface of any kind with random topography Z(x,y). This can be modelled as a Gaussian process:

$$Z(x,y)=S(x,y)+\zeta \qquad (1.1)$$

$$\zeta \sim N(\mu,\sigma^2) \qquad (1.2)$$

where $S(x,y)$ is the generic topography shape and $\zeta$ is the random roughness component of the same, normally distributed with mean $\mu$ and variance $\sigma^2$. For simplicity and for reasons that will become apparent below, let us consider a flat surface where $S(x,y) = w$.

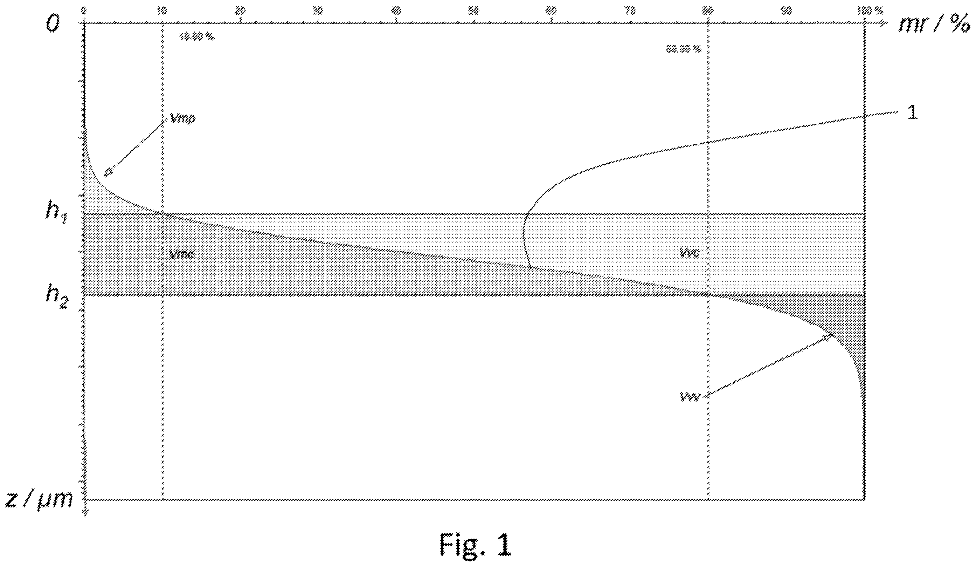

In general, for any surface with random topography $Z(x,y)$, the cumulative height probability function (or height distribution function) is an Abbott-Firestone curve 1 like the one shown, for a flat surface, in Figure 1, where $V_{mp}$ represents a material volume of peaks, $V_{mc}$ a material volume of a plateau, $V_{vc}$ a void volume of the plateau, and $V_{vv}$ a void volume of the valleys; the axis of abscissae shows the material ratio value, while the axis of ordinates shows the topography height.

It is known that such a distribution has its mean, mode and median that coincide at the inflection point in the centre of the Abbott-Firestone curve. It must be underlined that for Gamma, Normal and t-Student distributions the mode corresponds, in general, to the inflection point of the distribution function, and that, for the flat surface taken into account, the mode corresponds to the height of the plane $S(x,y)$ plus the average roughness, i.e. $z=w+\mu$.

Let us now assume that a machining operation is to be carried out which implies mechanical contact with a counterpart (texturing, refacing, honing, etc.), i.e. a tribological process of any kind. This surface process results in a topography modification, in that it introduces a distribution of peaks and valleys and a roughness variation that alter the shape of the Abbott-Firestone curve.

The latter has five portions: peaks, valleys, plateaus, and transition zones. This changes the relationship among height mode, mean and median, which will no longer be the same, and, in general, it will no longer be ensured that the distribution is a normal or t-Student one, or that it can be modelled as belonging to the Gamma distribution family (particularly for bimodal distributions).

Let us now measure the topography before and after the tribological process, considering then the difference surface between the two measurements. The result will eliminate, by definition, both the shape of the surface and the roughness in those areas not affected by the tribological process under consideration. Therefore, the difference topography will turn out to be, nominally, a plane at height $S(x,y)=0$, where localized wear phenomena can be discerned. Consequently, the pattern of the Abbott-Firestone curve is similar to the normal one, but with modified tails, which can be more or less steep depending on whether valleys or material additions are predominant.

As already pointed out, the presence of significant valleys and peaks implies that the mode, mean and median of the Abbott-Firestone curve no longer coincide; furthermore, when the areal extension of the wear caused by the tribological process is negligible in comparison with the measured surface, the mode will correspond to the level of the plane, i.e. height $z=0$.

Correspondingly, the difference operation ensures that the transition zones are negligible; moreover, the plateau zone shows a distribution that is solely due to the measurement and alignment error introduced to determine the difference, so that the resulting Abbott-Firestone curve will actually contain only two zones, i.e. peaks and valleys, and therefore a single height, i.e. height h*, will be sufficient to distinguish them.

It is important to underline that, although the difference operation ensures that the shape will be $S(x,y)=0$, it is nevertheless impossible to guarantee that the height distribution of the difference topography will be a Gamma distribution, and much less that it will be a normal (or t-Student) distribution. However, if the measurements include a sufficient part of unworn surface, unimodality will be guaranteed.

Wear volume characterization requires, according to ISO, ASTM and literature, an evaluation of the volume of worn material, referred to as wear volume, Vw, and of the added material, referred to as galling volume, Vg, due to phenomena of plastic deposition or adhesion of debris particles. Such volumes can be assessed by means of the Abbott-Firestone curve as topographic volume parameters, i.e. void volume Vv and material volume Vm, respectively.

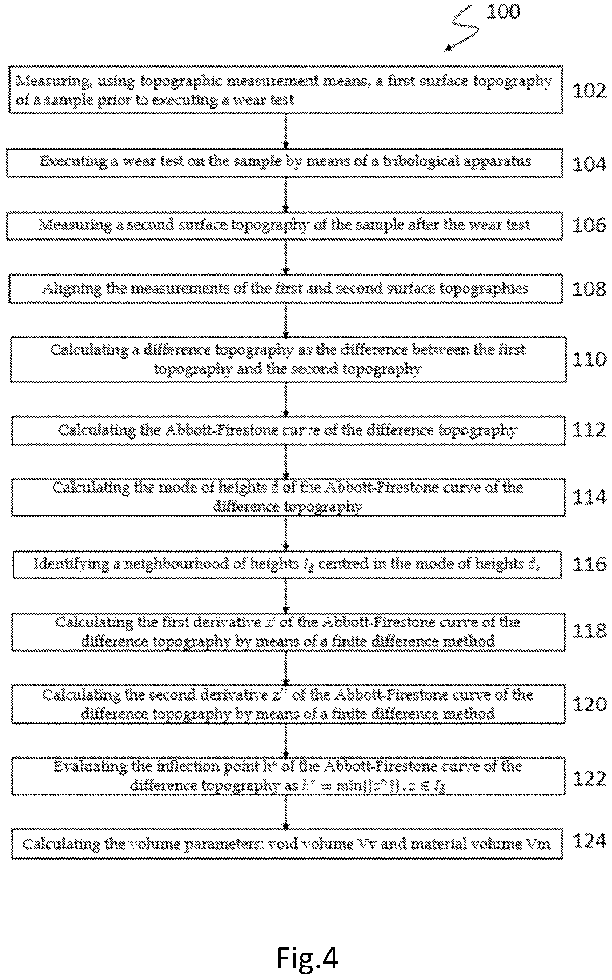

In order to calculate these parameters in accordance with the ISO 25178-2 standard, it is necessary to, after the measurement, remove the nominal shape of the surface and identify the thresholds h1 and h2 to be used for their evaluation. As previously mentioned herein, h1=h2=h*. In particular, h* is the inflection point of the Abbott-Firestone curve when an adequate characterization process 100 is carried out which comprises the following steps, as shown in Figure 4:

I. Measuring (step 102), using topographic measurement means, a first surface topography of a sample prior to executing a wear test; for this purpose, a topographic microscope may preferably be employed, in particular the Zygo NewView 9000, Alicona G5, Alicona IFSR25 models, with the optional execution of a stitching process for mutually joining multiple images (field-of-view);

II. Executing (step 104) a wear test on the surface of the sample by means of a tribological apparatus, e.g. a pin-on-disc apparatus, in particular the AntonPaar TRB model, or a test bench for splined couplings;

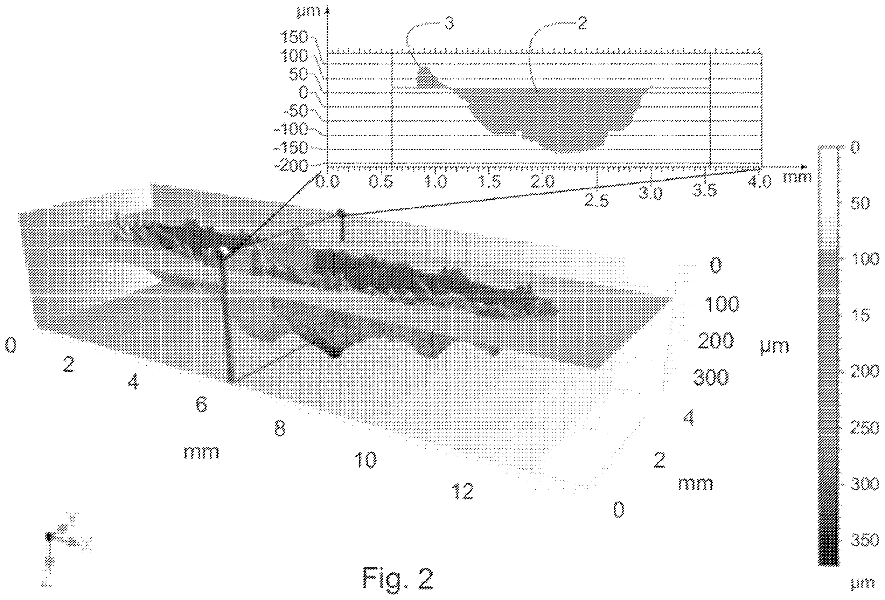

III. Measuring (step 106) a second surface topography of the sample after the wear test, preferably using the same topographic measurement means specified at step I. Figure 2 shows an example of an irregular pin-on-disc trace with galling phenomena at the edges, wherein a profile is highlighted where a removed volume 2 and an added volume 3 are visible;

IV. Aligning (step 108) the measurements of the first and second surface topographies, respectively obtained before and after the wear test, e.g. by means of machine vision algorithms such as ICP (Iterative Closest Point) or ICP-feature augmented (see the aforementioned document: Genta et al., "Uncertainty evaluation of small wear measurements on complex technological surfaces by machine vision-aided topographical methods", CIRP Annals - Manufacturing Technology 70(1): 451-454, May 2021);

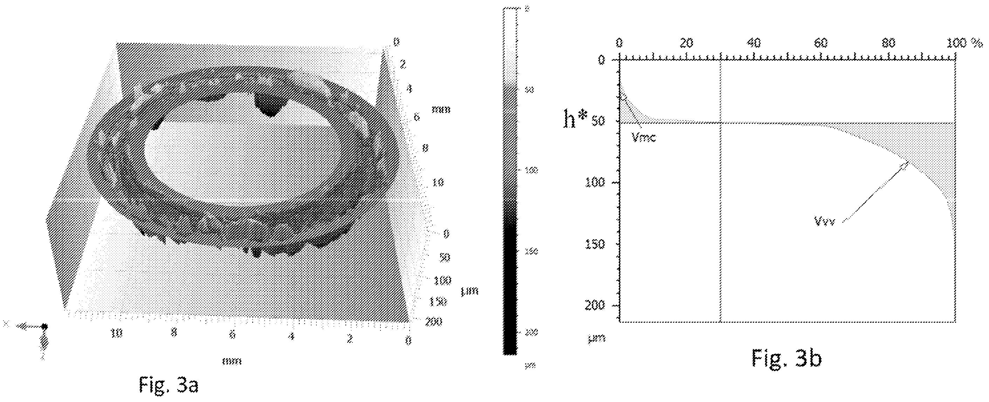

V. Calculating (step 110) a difference topography as the difference between the first topography and the second topography, respectively obtained before the wear test and after the wear test; Figure 3a shows an example of a measured topography resulting from the alignment according to step IV and the difference according to step V;

VI. Calculating (step 112) the Abbott-Firestone curve

$\mathcal{AF} = \mathcal{AF}(z)$ of the difference topography, said curve comprising a number n of points; an example of an Abbott-Firestone curve that may be obtained from the topography of Figure 3a is shown in Figure 3b;

VII. Identifying a threshold, or inflection point, h* of the Abbott-Firestone curve in the neighbourhood of the reference plane of the difference topography;

VIII. Calculating the volume parameters (step 124), i.e. void volume Vv and material volume Vm, as defined in ISO 25178-2:2012.

Prior to step I), it is possible to execute a step IX) of marking the surface of the sample in order to facilitate the alignment that will be performed during the next step IV); such marking may be made, for example, by scratching, indentation or other methods known in the art.

When no pre-wear measurements are available, the removal of the nominal shape may also give acceptable results in some specific cases, while however not generalizing the achievement of high accuracy levels by the method.

According to the present invention, the value of the inflection point h* is determined automatically by exploiting numerical determination methods that allow for direct evaluation.

The calculation of the inflection point h* requires the execution of the following steps:

a. Calculating (step 114) the mode of heights $\tilde{z}$ of the Abbott-Firestone curve $\mathcal{AF} = \mathcal{AF}(z)$ calculated at step VI;

b. Identifying (step 116) a neighbourhood of heights $I_{\tilde{z}}$ centred in the mode of heights $\tilde{z}$, e.g. a neighbourhood of $\pm 10\%$ around the mode of heights $\tilde{z}$,

$$I_{\tilde{z}} = \{0.9\tilde{z}, 1.1\tilde{z}\}$$

c. Calculating (step 118) the first derivative of the Abbott-Firestone curve $\mathcal{AF} = \mathcal{AF}(z)$.

In a preferred embodiment, the first derivative of the curve $\mathcal{AF} = \mathcal{AF}(z)$ is calculated from the first derivative of the inverse curve, $\mathcal{AF}^{-1} = z = z(\mathcal{AF})$, by using a numerical method. The inverse curve is used merely for ease of implementation and representation of the result. An applicable numerical method is the simple finite difference method, i.e. evaluating, point by point, the ratio between the difference in the ordinate height values and the corresponding difference in the cumulative probability value, $z_i' = \frac{z_i - z_{i-1}}{\mathcal{AF}(z_i) - \mathcal{AF}(z_{i-1})}$, with $i \in \{2,..., n\}$.

d. Calculating (step 120) the second derivative of the Abbott-Firestone curve $\mathcal{AF} = \mathcal{AF}(z)$, by using the simple finite difference method, i.e. $z_i'' = \frac{z_i' - z_{i-1}'}{\mathcal{AF}(z_i) - \mathcal{AF}(z_{i-1})}$, with $i \in \{3,..., n\}$. In a preferred embodiment, the second derivative of the curve $\mathcal{AF} = \mathcal{AF}(z)$ is calculated from the second derivative of the inverse curve, $\mathcal{AF}^{-1} = z = z(\mathcal{AF})$, by using a numerical method.

e. Identifying (step 122) the inflection point as $h^* = \min\{|z''|\}, z \in I_{\tilde{z}}$.

In an alternative embodiment, the simple finite difference method may be replaced with a more complex finite difference method, such as Fornberg's algorithm, described in document "Generation of finite difference formulas on arbitrality spaced grids", Mathematics of Computation, Vol. 51, No. 184, pp. 699-706.

Note that, for Gamma, Normal and t-Student distributions, the inflection point corresponds to the mode of the distribution function. However, the experimental surface distribution may have such shapes that the experimental distribution may turn out to be significantly different from the theoretical one (for example, when considerable amounts of debris, galling, etc. are present). The calculation of the second derivative and the zero-point search ensure algorithm robustness against any problems connected to this phenomenon. In particular, by binding the inflection-point search within the neighbourhood of the mode of heights, i.e. the height of the mean plane, the algorithm proposed herein generalizes and guarantees the correctness of the solution even in cases wherein the height probability distribution is not unimodal and cannot therefore be modelled with a Gamma or Normal (or t-Student) distribution.

The method 100 according to the invention can be implemented by means of a measurement apparatus 200 that comprises topographic measurement means 201, e.g. a topographic microscope, for recording measurement data of a surface 202 of a sample 207 that has been subjected to a tribological process by means of a tribological apparatus 210, e.g. a pin-on-disc apparatus or a test bench for splined couplings.

The measurement apparatus 200 further comprises a computer 204, in particular a PC, a tablet, a smartphone, a notebook, or similar electronic devices, adapted to receive the measurement data from the topographic measurement means 201 via a wireless or wired connection 203, and to control said measurement apparatus 200.

The computer 204 comprises a module 205 for aligning the first and second surface topographies; a module 206 for calculating the inflection point h*, particularly according to steps 114-122 of the method 100, and for calculating the volume parameters; a control unit 209, in particular a microprocessor, adapted to co-ordinate the reception of the measurement data 203 and the activities of the modules 205 and 206, and to send any command instructions to the topographic measurement means 201.

The measurement apparatus 200 may optionally comprise the tribological apparatus 210.

The method 100 can be implemented, for example, through a computer program product adapted to be read by the computer 204.

The computer program product, e.g. a CD, a flash memory, a magnetic tape or the like, may comprise a set of instructions that, when loaded in memory means 208 of the computer 204, are adapted to execute the method 100 according to the present invention, such instructions being coded in accordance with a programming language that can be interpreted by the computer 204.

The features and advantages of the measurement method and apparatus for automatic characterization of wear traces in tribological tests according to the present invention are apparent in light of the above description.

The measurement method and apparatus for automatic characterization of wear traces in tribological tests advantageously reduce the uncertainty of measurement, thereby improving the precision of such characterization.

Another advantage of such method lies in the fact that it provides more accurate measurements than would be possible with prior-art methods.

A further advantage of the method according to the present invention results from fast inspection and measurement speeds.

Lastly, the method according to the present invention is, advantageously, automatic and insensitive to arbitrary choices made by the operator, thus being robust.

The measurement method and apparatus for automatic characterization of wear traces in tribological tests described herein by way of example may be subject to many possible variations without departing from the novelty spirit of the inventive idea; it is also clear that in the practical implementation of the invention the illustrated details may have different shapes or be replaced with other technically equivalent elements.

It can therefore be easily understood that the present invention is not limited to the above-described measurement method and apparatus for automatic characterization of wear traces in tribological tests, but may be subject to many modifications, improvements or replacements of equivalent parts and elements without departing from the inventive idea, as clearly specified in the following claims.

## Claims

1. **Method** for automatic characterization of wear traces in tribological tests, comprising the steps of:

   a) measuring (102) a first surface topography of a sample (207) prior to executing a wear test;
   b) executing (104) said wear test on said sample (207) by means of a tribological apparatus (210);
   c) measuring (106) a second surface topography of said sample (207) after said wear test;
   d) aligning (108) the measurements of said first and said second surface topographies;
   e) calculating (110) a difference topography as the difference between said first surface topography and said second surface topography;
   f) calculating (112) an Abbott-Firestone curve of said difference topography;
   g) identifying an inflection point, h*, of said Abbott-Firestone curve in the neighbourhood of the reference plane of said difference topography;
   h) calculating (124) the void volume, Vv, and material volume, Vm, parameters by means of said Abbott-Firestone curve and the identified inflection point,

   said method being **characterized in that** said step g) comprises the steps of:

   g1) calculating (114) a mode of heights, $\tilde{z}$, of the Abbott-Firestone curve, $\mathcal{AF} = \mathcal{AF}(z)$, of said difference topography, said Abbott-Firestone curve comprising a number n of points;
   g2) identifying (116) a neighbourhood of heights, $I_{\tilde{z}}$, centred in said mode of heights, $\tilde{z}$;
   g3) calculating (118) the first derivative of said Abbott-Firestone curve by means of a finite difference method as $z'_i = \frac{z_i - z_{i-1}}{\mathcal{AF}(z_i) - \mathcal{AF}(z_{i-1})}$, with i $\in \{2, ..., n\}$;
   g4) calculating (120) the second derivative of said Abbott-Firestone curve by means of a finite difference method as $z''_i = \frac{z'_i - z'_{i-1}}{\mathcal{AF}(z_i) - \mathcal{AF}(z_{i-1})}$, with i $\in \{3, ..., n\}$;
   g5) identifying (122) said inflection point as $h* = \min\{|z''|\}$, $z \in I_{\tilde{z}}$.

2. Method according to claim 1, wherein, prior to said step a), a step of marking the surface of said sample (207) is executed in order to facilitate the alignment step d).

3. Method according to claim 1 or 2, wherein said finite difference method is a simple finite difference method.

4. Method according to claim 1 or 2, wherein said finite difference method is Fornberg's algorithm.

5. Method according to one or more of the preceding claims, wherein in said steps g3) and g4) said first derivative, $z'_i$, and said second derivative, $z''_i$, are calculated starting from the inverse function of said Abbott-Firestone curve.

6. Method according to one or more of the preceding claims, wherein in said step g2) the neighbourhood is $\pm 10\%$ around said mode of heights, z~.

7. Measurement apparatus (200) for automatic characterization of wear traces in tribological tests, comprising topographic measurement means (201) adapted to measure wear data on a surface (202) of a sample (207), and a computer (204) comprising means (205,206,208,209) for receiving said data and implementing the method steps d) to h) of the method according to one or more of claims 1 to 6.

8. Computer program product comprising a set of instructions that, when loaded in memory means (208) of a computer (204) of a measurement apparatus according to claim 7, are adapted to execute the method steps d) to h) of the method according to one or more of claims 1 to 6.

**Patentansprüche**

1. Verfahren zur automatischen Charakterisierung von Verschleißspuren bei tribologischen Versuchen, umfassend die folgenden Schritte:

a) Messen (102) einer ersten Oberflächentopographie einer Probe (207) vor der Durchführung eines Verschleißversuchs;
b) Durchführen (104) des Verschleißversuchs an der Probe (207) mittels einer tribologischen Vorrichtung (210);
c) Messen (106) einer zweiten Oberflächentopographie der Probe (207) nach dem Verschleißversuch;
d) Ausrichten (108) der Messungen der ersten und der zweiten Oberflächentopographie;
e) Berechnen (110) einer Differenz-Topographie als Differenz zwischen der ersten Oberflächentopographie und der zweiten Oberflächentopographie;
f) Berechnen (112) einer Abbott-Firestone-Kurve der Differenz-Topographie;
g) Identifizieren eines Wendepunkts h* der Abbott-Firestone-Kurve in der Umgebung der Referenzebene der Differenz-Topographie;
h) Berechnen (124) der Parameter Hohlraumvolumen, Vv, und Materialvolumen, Vm, mittels der Abbott-Firestone-Kurve und des identifizierten Wendepunkts,

wobei das Verfahren **dadurch gekennzeichnet ist, dass** der Schritt g) die Schritte umfasst:

g1) Berechnen (114) eines Modus der Höhen, ž, der Abbott-Firestone-Kurve, AF = AF(z), der genannten Differenz-Topographie, wobei die genannte Abbott-Firestone-Kurve eine Anzahl n von Punkten umfasst;
g2) Identifizieren (116) einer Umgebung der Höhen, $I_{\check{z}}$, deren Mittelpunkt der genannte Modus der Höhen, ž, ist;
g3) Berechnen (118) der ersten Ableitung der Abbott-Firestone-Kurve mittels eines Finite-Differenzen-Verfahrens als $z_i' = \frac{z_i - z_{i-1}}{AF(z_i) - AF(z_{i-1})}$,

mit $i \in \{2, ..., n\}$;
g4) Berechnen (120) der zweiten Ableitung der Abbott-Firestone-Kurve mittels eines Finite-Differenzen-Verfahrens als $z_i'' = \frac{z_i' - z_{i-1}'}{AF(z_i) - AF(z_{i-1})}$,

mit $i \in \{3, ..., n\}$;
g5) Bestimmen (122) des Wendepunkts als $h^* = \min\{|z''|\}$ $z \in I_{\check{z}}$.

2. Verfahren nach Anspruch 1, wobei vor dem Schritt a) ein Schritt zum Markieren der Oberfläche der Probe (207) durchgeführt wird, um den Ausrichtungsschritt d) zu erleichtern.

3. Verfahren nach Anspruch 1 oder 2, wobei das Finite-Differenzen-Verfahren ein einfaches Finite-Differenzen-Verfahren ist.

4. Verfahren nach Anspruch 1 oder 2, wobei das Finite-Differenzen-Verfahren ein Fornberg-Algorithmus ist.

5. Verfahren nach einem oder mehreren der vorstehenden Ansprüche, wobei in den Schritten g3) und g4) die erste Ableitung, $z_i'$, und die zweite Ableitung,

$z_i''$, ausgehend von der Umkehrfunktion der Abbott-Firestone-Kurve berechnet werden.

6. Verfahren nach einem oder mehreren der vorstehenden Ansprüche, wobei in dem Schritt g2) die Umgebung $\pm 10$ % um den Modus der Höhen, ž, beträgt.

7. Messvorrichtung (200) zur automatischen Charakterisierung von Verschleißspuren bei tribologischen Versuchen, umfassend eine Topografiemesseinrichtung (201), die dazu ausgelegt ist, Verschleißdaten auf einer Oberfläche (202) einer Probe (207) zu messen, und einen Computer (204), der Mittel (205, 206, 208, 209) zum Empfangen der genannten Daten und zur Durchführung der Verfahrensschritte d) bis h) des Verfahrens nach einem oder mehreren der Ansprüche 1 bis 6 umfasst.

8. Computerprogrammprodukt, das einen Befehlssatz umfasst, der, wenn er in die Speichereinrichtung (208) eines Computers (204) einer Messvorrichtung gemäß Anspruch 7 geladen wird, dazu ausgelegt ist, die Verfahrensschritte d) bis h) des Verfahrens nach einem oder mehreren der Ansprüche 1 bis 6 auszuführen.

## Revendications

1. - Procédé de caractérisation automatique de traces d'usure dans des tests tribologiques, comprenant les étapes consistant à :

   a) mesurer (102) une première topographie de surface d'un échantillon (207) avant l'exécution d'un test à l'usure ;
   b) exécuter (104) ledit test à l'usure sur ledit échantillon (207) au moyen d'un appareil tribologique (210) ;
   c) mesurer (106) une seconde topographie de surface dudit échantillon (207) après ledit test à l'usure ;
   d) aligner (108) les mesures de ladite première et de ladite seconde topographie de surface ;
   e) calculer (110) une topographie de différence en tant que différence entre ladite première topographie de surface et ladite seconde topographie de surface ;
   f) calculer (112) une courbe d'Abbott-Firestone de ladite topographie de différence ;
   g) identifier un point d'inflexion, h*, de ladite courbe d'Abbott-Firestone au voisinage du plan de référence de ladite topographie de différence ;
   h) calculer (124) les paramètres de volume de vide, Vv, et de volume de matériau, Vm, au moyen de ladite courbe d'Abbott-Firestone et du point d'inflexion identifié,

   ledit procédé est **caractérisé par le fait que** ladite étape g) comprend les étapes consistant à :

   g1) calculer (114) un mode de hauteurs, ž, de la courbe d'Abbott-Firestone, $\mathcal{AF} = \mathcal{AF}(z)$, de ladite topographie de différence, ladite courbe d'Abbott-Firestone comprenant un nombre n de points ;
   g2) identifier (116) un voisinage de hauteurs, $I_{\check{z}}$, centré dans ledit mode de hauteurs, ž;
   g3) calculer (118) la dérivée première de ladite courbe d'Abbott-Firestone au moyen d'une méthode de différences finies en tant que

   $$z_i' = \frac{z_i - z_{i-1}}{\mathcal{AF}(z_i) - \mathcal{AF}(z_{i-1})}, \quad \text{avec } i \in \{2,..., n\} ;$$

   g4) calculer (120) la dérivée seconde de ladite courbe d'Abbott-Firestone au moyen d'une méthode des différences finies en tant que

   $$z_i'' = \frac{z'_i - z'_{i-1}}{\mathcal{AF}(z_i) - \mathcal{AF}(z_{i-1})} \quad \text{avec } i \in \{3, ... n\} ;$$

   g5) identifier (122) ledit point d'inflexion en tant que $h^* = \min\{|z''|\}, z \in I_{\check{z}}$.

2. - Procédé selon la revendication 1, dans lequel, avant ladite étape a), une étape de marquage de la surface dudit échantillon (207) est exécutée afin de faciliter l'étape d'alignement d).

3. - Procédé selon la revendication 1 ou 2, dans lequel ladite méthode des différences finies est une méthode des différences finies simple.

4. - Procédé selon la revendication 1 ou 2, dans lequel ladite méthode des différences finies est l'algorithme de Fornberg.

5. - Procédé selon l'une ou plusieurs des revendications précédentes, dans lequel, dans lesdites étapes g3) et g4), ladite dérivée première, $z_i'$, et ladite dérivée seconde, $z_i''$, sont calculées en partant de la fonction inverse de ladite courbe d'Abbott-Firestone.

6. - Procédé selon l'une ou plusieurs des revendications précédentes, dans lequel, dans ladite étape g2), le voisinage est de $\pm 10\%$ autour dudit mode de hauteurs, ž.

7. - Appareil de mesure (200) pour la caractérisation automatique de traces d'usure dans des tests tribologiques, comprenant des moyens de mesure topographique (201) aptes à mesurer des données d'usure sur une surface (202) d'un échantillon (207), et un ordinateur (204) comprenant des moyens (205, 206, 208, 209) pour recevoir lesdites données et mettre en œuvre les étapes de procédé d) à h) du procédé selon l'une ou plusieurs des revendications 1 à 6.

8. - Produit programme d'ordinateur comprenant un ensemble d'instructions qui, lorsqu'elles sont chargées dans des moyens de mémoire (208) d'un ordinateur (204) d'un appareil de mesure selon la revendication 7, sont aptes à exécuter les étapes de procédé d) à h) du procédé selon l'une ou plusieurs des revendications 1 à 6.

Fig. 1

Fig. 2

Fig. 3b

Fig. 3a

100

| Measuring, using topographic measurement means, a first surface topography of a sample prior to executing a wear test | 102 |

| Executing a wear test on the sample by means of a tribological apparatus | 104 |

| Measuring a second surface topography of the sample after the wear test | 106 |

| Aligning the measurements of the first and second surface topographies | 108 |

| Calculating a difference topography as the difference between the first topography and the second topography | 110 |

| Calculating the Abbott-Firestone curve of the difference topography | 112 |

| Calculating the mode of heights $\hat{z}$ of the Abbott-Firestone curve of the difference topography | 114 |

| Identifying a neighbourhood of heights $I_{\hat{z}}$ centred in the mode of heights $\hat{z}$, | 116 |

| Calculating the first derivative z' of the Abbott-Firestone curve of the difference topography by means of a finite difference method | 118 |

| Calculating the second derivative z'' of the Abbott-Firestone curve of the difference topography by means of a finite difference method | 120 |

| Evaluating the inflection point h* of the Abbott-Firestone curve of the difference topography as $h^* = \min(|z''|), z \in I_{\hat{z}}$ | 122 |

| Calculating the volume parameters: void volume Vv and material volume Vm | 124 |

Fig.4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MACULOTTI et al.** Uncertainty-based comparison of conventional and surface topography-based methods for wear volume evaluation in pin-on-disc tribological test. *Tribology International*, January 2022, vol. 165, 107260
- **GENTA et al.** Uncertainty evaluation of small wear measurements on complex technological surfaces by machine vision-aided topographical methods. *CIRP Annals - Manufacturing Technology*, May 2021, vol. 70 (1), 451-454
- **TAKIMOTO et al.** Rough surface wear analysis using image processing techniques. *IFAC-PapersOnLine*, 2016, vol. 49-31, 7-12
- The Areal Field Parameters. **FRANÇOIS BLATEYRON ; LEACH**. Characterisation of Areal Surface Texture. Springer, 2013
- **PAWLUS et al.** Material ratio curve as information on the state of surface topography - A review. *Precision Engineering*, September 2020, vol. 65, 240-258
- Generation of finite difference formulas on arbitrality spaced grids. *Mathematics of Computation*, vol. 51 (184), 699-706